# EUROPÄISCHE PATENTANMELDUNG

(11) **EP 2 030 724 A1**
(43) Veröffentlichungstag der Anmeldung: **04.03.2009**
(21) Anmeldenummer: 08013637.7
(22) Anmeldetag: 30.07.2008
(51) Int. Cl.: B23Q 7/04, B25J 9/10, B23Q 3/155

(54) **Werkstückwechselsystem**

(30) Priorität: 28.08.2007 DE 102007040491
(71) Anmelder: ads-tec GmbH, 70771 Leinfelden-Echterdingen (DE)
(72) Erfinder: Frank, Jens, 71686 Remseck (DE); Greif, Andreas, 73235 Weilheim (DE); Von Bonin, Volkart, 70619 Stuttgart (DE)
(74) Vertreter: Gleiss, Alf-Olav

(57) **Zusammenfassung**

Es wird ein Werkstückwechselsystem (1) für Werkstückbearbeitungsmaschinen vorgeschlagen, das eine einen ersten und einen zweiten Werkstückgreifer (5,9) aufweisende Werkstückwechseleinheit (3) umfasst. Es zeichnet sich dadurch aus, dass dem ersten Werkstückgreifer (5) ein drehbar gelagerter erster Arm (7) und dem zweiten Werkstückgreifer (9) ein drehbar gelagerter zweiter Arm (11) zugeordnet ist, und dadurch, dass der erste Arm (7), der zweite Arm (11), der erste Werkstückgreifer (5) und der zweite Werkstückgreifer (9) durch getrennte Antriebe unabhängig voneinander betätigbar sind.

## Beschreibung

Die Erfindung betrifft ein Werkstückwechselsystem für Werkstückbearbeitungsmaschinen gemäß Oberbegriff des Anspruchs 1.

Werkstückwechselsysteme der hier angesprochenen Art sind bekannt. Sie weisen eine Werkstückwechseleinheit auf, die einen ersten und einen zweiten Werkstückgreifer umfasst. Um einen Werkstückwechsel durchzuführen, greift sich ein Werkstückgreifer der Werkstückwechseleinheit ein zu bearbeitendes Werkstück aus einem Magazin. Die Werkstückwechseleinheit wird anschließend mit dem Werkstück zu einem Bearbeitungsbereich beispielsweise in einer Werkstückbearbeitungsmaschine verlagert, wo ein Wechsel des zu bearbeitenden Werkstücks gegen ein fertig bearbeitetes Werkstück stattfindet. Das Werkstückwechselsystem legt das fertig bearbeitete Werkstück in einem dafür vorgesehen Magazin ab und greift sich das nächste zu bearbeitende Werkstück aus dem entsprechenden Magazin. Es hat sich bei den bekannten Werkstückwechselsystemen gezeigt, dass ein Wechsel zwischen einem fertig bearbeiteten und einem noch zu bearbeitenden Werkstück in dem Bearbeitungsbereich relativ lange dauert. Außerdem sind die bekannten Werkstückwechselsysteme störungsanfällig und wartungsintensiv.

Aufgabe der Erfindung ist es daher, ein Werkstückwechselsystem mit reduzierten Werkstückwechselzeiten zu schaffen, welches robust und störungsarm ausgebildet ist.

Zur Lösung dieser Aufgabe wird ein Werkstückwechselsystem mit den Merkmalen des Anspruchs 1 vorgeschlagen. Es zeichnet sich dadurch aus, dass dem ersten Werkstückgreifer ein drehbar gelagerter erster Arm und dem zweiten Werkstückgreifer ein drehbar gelagerter zweiter Arm zugeordnet ist. Ferner zeichnet sich das Werkstückwechselsystem dadurch aus, dass der erste Arm, der zweite Arm, der erste Werkstückgreifer und der zweite Werkstückgreifer durch getrennte Antriebe unabhängig voneinander betätigbar sind. Durch diese Ausgestaltung des hier vorgeschlagenen Werkstückwechselsystems ist eine äußerst flexible Betätigung sowohl der Arme als auch der Werkstückgreifer möglich, sodass ein Werkstückwechsel wesentlich schneller als bei bekannten Werkstückwechselsystemen erfolgen kann.

Besonders bevorzugt wird ein Werkstückwechselsystem, das sich dadurch auszeichnet, dass die Antriebe über Wellen mit den Armen und den Werkstückgreifern gekoppelt sind. Diese Ausgestaltung bietet den Vorteil, dass sämtliche Antriebe außerhalb des Bearbeitungsbereichs der Werkstückbearbeitungsmaschine und/oder vollständig außerhalb der Werkstückbearbeitungsmaschine angeordnet werden können. Auch ist es somit möglich, sämtliche elektronischen und/oder elektrischen Mittel, insbesondere sensorische Elemente, die mit den Armen oder mit den Werkstückgreifern zusammenwirken, außerhalb des Bearbeitungsbereichs und/oder vollständig außerhalb der Werkstückbearbeitungsmaschine anzuordnen.

Weiterhin bevorzugt wird ein Werkstückwechselsystem, das sich dadurch auszeichnet, dass mindestens eine der Wellen als Führungswelle eines Schlittens dient. Insbesondere kann dabei vorgesehen sein, dass die Arme drehbar an dem Schlitten gelagert sind. Die Werkstückwechseleinheit ist somit in vorteilhafter Weise entlang der mindestens einen Führungswelle von einem Magazinbereich, aus dem ein Werkstückgreifer ein zu bearbeitendes Werkstück greift, in einen Bearbeitungsbereich der Werkstückbearbeitungsmaschine verlagerbar. Die Verlagerung des Schlittens entlang der mindestens einen Führungswelle erfolgt dabei vorzugsweise über einen weiteren Antrieb. Es zeigt sich also, dass insgesamt fünf Antriebe vorgesehen sind, nämlich zwei Antriebe für die Arme, zwei Antriebe für die Werkstückgreifer und ein Antrieb für die Verlagerung des Schlittens entlang wenigstens einer Führungswelle.

Bei einem bevorzugten Werkstückwechselsystem ist vorgesehen, dass der mit dem ersten Werkstückgreifer zusammenwirkende Antrieb dreh- oder schwenkbar gelagert ist. Der dreh- oder schwenkbar gelagerte Antrieb ist vorzugsweise über eine starre Stange mit der dem ersten Arm zugeordneten Welle gekoppelt. Diese vorteilhafte Ausgestaltung bewirkt, dass eine Änderung der Funktionsstellung des ersten Werkstückgreifers bei einer Bewegung des ersten Arms durch den dreh- oder schwenkbar gelagerten Antrieb vermieden wird. Eine Änderung der Funktionsstellung des ersten Werkstückgreifers, die durch die Bewegung des ersten Arms bewirkt werden würde, wird durch die vorteilhafte Kopplung und die dreh- oder schwenkbare Lagerung des dem ersten Werkstückgreifer zugeordneten Antriebs in vorteilhafter Weise vermieden. Somit ist gewährleistet, dass ein Werkstückgreifer, der beispielsweise in einer geschlossenen Funktionsstellung ein Werkstück umgreift, bei einer Bewegung des ersten Arms das Werkstück sicher gehalten wird. Vorzugsweise ist hier vorgesehen, dass der erste Arm unmittelbar mit der Welle zusammenwirkt.

Auch wird ein Werkstückwechselsystem bevorzugt, das sich dadurch auszeichnet, dass der zweite Arm über ein Kopplungselement mit der Welle zusammenwirkt. Diese Ausgestaltung bewirkt, dass der zweite Arm eine überlagerte Parallel- und Transversalbewegung ausführt. Unter anderem durch diese überlagerte Parallel- und Transversalbewegung wird in vorteilhafter Weise bewirkt, dass bei einer Bewegung des zweiten Arms die Funktionsstellung des zweiten Werkstückgreifers unverändert bleibt. Im Falle einer Bewegung des zweiten Arms sind also keinerlei Ausgleichsmechanismen nötig, die eine Änderung der Funktionsstellung des zweiten Werkstückgreifers während einer Bewegung des zweiten Arms verhindern.

Weitere Ausführungsformen der Erfindung ergeben sich aus den Unteransprüchen.

Die Erfindung wird im Folgenden anhand der Zeichnung näher erläutert. Es zeigen:
- Figur 1: eine perspektivische Darstellung eines Bereichs eines Werkstückwechselsystems;
- Figur 2: eine perspektivische Darstellung eines Antriebsbereichs des Werkstückwechselsystems;
- Figur 3: eine Seitenansicht des Werkstückwechselsystems mit dem ersten Arm und dem ersten Werkstückgreifer in einer ersten Position des ersten Arms;
- Figur 4: eine Seitenansicht des Werkstückwechselsystems mit dem ersten Arm und dem ersten Werkstückgreifer in einer zweiten Position des ersten Arms;
- Figur 5: eine perspektivische Darstellung des Werkstückwech-selsystems;
- Figur 6: eine Seitenansicht des Werkstückwechselsystems mit dem zweiten Arm und dem zweiten Werkstückgreifer in einer ersten Funktionsstellung des Werkstückgreifers und einer ersten Position des zweiten Arms;
- Figur 7: eine Seitenansicht eines Werkstückwechselsystems mit dem zweiten Arm und dem zweiten Werkstückgreifer in der ersten Funktionsstellung des Werkstückgreifers und einer zweiten Position des zweiten Arms;
- Figur 8: eine Seitenansicht eines Werkstückwechselsystems mit dem zweiten Arm und dem zweiten Werkstückgreifer in einer zweiten Funktionsstellung des Werkstückgreifers und der zweiten Position des zweiten Arms;
- Figur 9: eine perspektivische Darstellung eines Werkstückwechselsystems mit dem ersten und dem zweiten Arm in einer ersten Position;
- Figur 10: eine perspektivische Darstellung eines Werkstückwechselsystems mit dem ersten und dem zweiten Arm in einer zweiten Position.

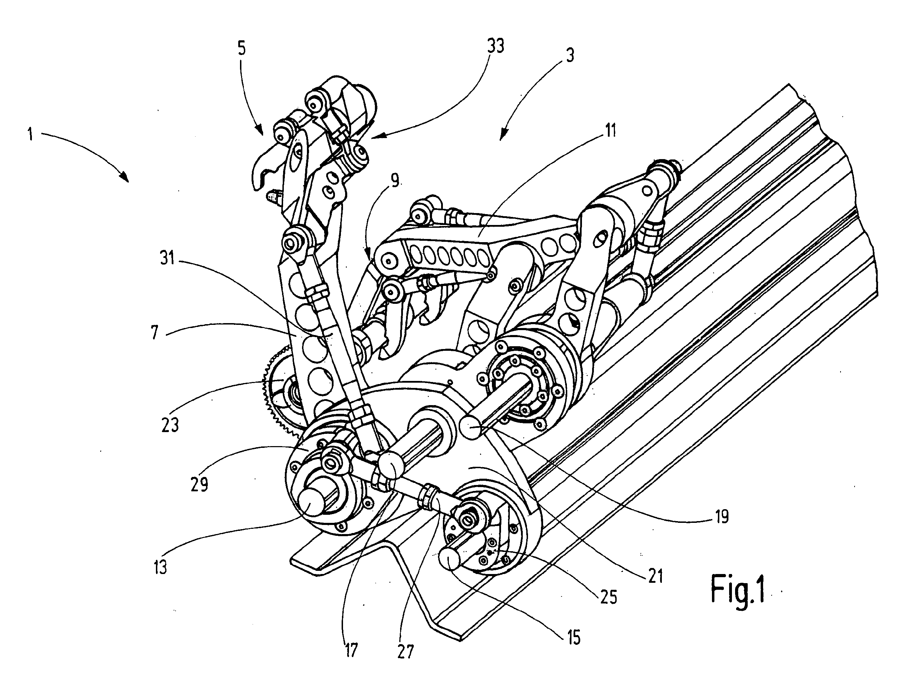

Figur 1 zeigt eine perspektivische Darstellung eines Bereichs eines Werkstückwechselsystems 1 mit einer Werkstückwechseleinheit 3.

Die Werkstückwechseleinheit 3 umfasst einen ersten Werkstückgreifer 5, der einem ersten Arm 7 zugeordnet ist. Die Werkstückwechseleinheit 3 umfasst ferner einen zweiten Werkstückgreifer 9, der einem zweiten Arm 11 zugeordnet ist. Die beiden Arme 7 und 11 sowie die beiden Werkstückgreifer 5 und 9 sind über hier nicht dargestellte getrennte Antriebe unabhängig voneinander betätigbar. Insbesondere ist vorgesehen, dass die Antriebe über Wellen mit den Armen 7 und 11 und mit den Werkstückgreifern 5 und 9 gekoppelt sind. Der erste Arm 7 ist dabei mit einem hier nicht dargestellten Antrieb über eine erste Welle 13 gekoppelt. Der erste Werkstückgreifer 5 ist über eine zweite Welle 15 mit einem Antrieb gekoppelt. Entsprechend sind der zweite Arm 11 über eine dritte Welle 17 und der zweite Werkstückgreifer 9 über eine vierte Welle 19 mit Antrieben gekoppelt.

Figur 1 macht deutlich, dass mindestens eine Welle als Führungswelle eines Schlittens 21 dient. Bei dem hier dargestellten Werkstückwechselsystem 1 ist vorgesehen, dass der Schlitten 21 entlang zweier Führungswellen verlagerbar ist, die im vorliegenden Fall durch die erste Welle 13 und die zweite Welle 15 realisiert werden. Der Schlitten 21 ist vorzugsweise entlang der ersten Welle 13 und entlang der zweiten Welle 15 über einen hier nicht dargestellten getrennten Antrieb, beispielsweise mittels eines Riemens, verlagerbar. Es zeigt sich also, dass insgesamt fünf Antriebe vorgesehen sind, die es ermöglichen, den ersten Arm 7, den zweiten Arm 11 sowie den ersten Werkstückgreifer 5 und den zweiten Werkstückgreifer 9 unabhängig voneinander zu betätigen.

Die Arme 7 und 11 sind vorzugsweise dreh- oder schwenkbar an dem Schlitten 21 gelagert, sodass sie mitsamt den Werkstückgreifern 5 und 9 in den Bearbeitungsbereich einer hier nicht dargestellten Werkstückbearbeitungsmaschine verlagerbar sind. Bei der Werkstückbearbeitungsmaschine kann es sich beispielsweise um eine Schleifmaschine handeln, die ein zu bearbeitendes Werkstück zwischen zwei Spitzen in dem Werkstückbearbeitungsbereich hält.

Insbesondere ist vorgesehen, dass der erste Arm 7 und der zweite Arm 11 während eines Werkstückwechsels, also während des Wechsels eines zu bearbeitenden Teil gegen ein fertig bearbeitetes Teil, so relativ zueinander verlagerbar sind, dass die jeweils ein Werkstück 23 haltenden Werkstückgreifer 5 und 9 kollisionsfrei aneinander vorbeischwenken, worauf später noch näher eingegangen wird. Insbesondere ist vorgesehen, dass ein Werkstückgreifer 5 oder 9 das fertig bearbeitete Werkstück nach dessen Bearbeitung aus dem Bearbeitungsbereich entfernt und der andere Werkstückgreifer 9 oder 5 gleichzeitig ein noch zu bearbeitendes Werkstück 23 in dem Bearbeitungsbereich zwischen den Spitzen positioniert.

Die Werkstückwechseleinheit 3 ist mit dem Schlitten 21 entlang der Führungswellen zu einem Magazin verlagerbar, insbesondere zu einer Stapelzelle, wo sich einer der Werkstückgreifer 5 oder 9 ein neues zu bearbeitendes Teil aus einem Übergabebereich greifen kann. Anschließend wird die Werkstückwechseleinheit 3 mit dem Schlitten 21 entlang der Führungswellen zu dem Bearbeitungsbereich der Werkstückbearbeitungsmaschine verlagert.

Bei dem hier dargestellten Werkstückwechselsystem 1 ist vorgesehen, dass sich die Funktionsweise des ersten Werkstückgreifers 5 und des ersten Arms 7 von der Funktionsweise des zweiten Werkstückgreifers 9 und des zweiten Arms 11 unterscheidet.

Im Folgenden soll zunächst auf die Funktionsweise des ersten Arms 7 und des ersten Werkstückgreifers 5 eingegangen werden. Der erste Arm 7 wirkt hier unmittelbar mit der ersten Welle 13 zusammen, greift also direkt an dieser an. Die Welle 13 ist vorzugsweise als Drehmomentwelle ausgebildet und überträgt so ein Drehmoment auf den ersten Arm 7, wenn die Welle 13 durch den hier nicht dargestellten Antrieb gedreht wird. Eine Drehung der ersten Welle 13 bewirkt also eine Dreh- oder Schwenkbewegung des ersten Arms 7 mit dem ersten Werkstückgreifer 5 um die erste Welle 13 herum. Der erste Werkstückgreifer 5 ist mit der zweiten Welle 15 gekoppelt, die über einen hier nicht dargestellten Antrieb angetrieben wird. Auch bei der zweiten Welle 15 handelt es sich vorzugsweise um eine Drehmomentwelle, die eine Drehung auf ein an dem Schlitten 21 drehbar gelagertes Drehelement 25 überträgt. Das Drehelement 25 ist drehbar mit einem Ende einer starren Stange 27 verbunden, die mit ihrem anderen Ende drehbar mit einem weiteren drehbar an dem Schlitten 21 gelagerten Drehelement 29 verbunden ist. Eine Drehbewegung der Welle 15 bewirkt somit eine Drehung des Drehelements 25 und damit eine Verlagerung der starren Stange 27 nach links oder nach rechts, je nach Drehrichtung der Welle 15. Durch die Verlagerung der starren Stange 27 wird auch eine Drehung des Drehelements 29 und damit die Betätigung einer weiteren starren Stange 31 bewirkt, die über einen entsprechenden Greifermechanismus 33 eine Veränderung der Funktionsstellung des ersten Werkstückgreifers 5 bewirkt. Je nach Drehrichtung der zweiten Welle 15 lässt sich somit die Funktionsstellung des Werkstückgreifers 5 verändern, beispielsweise von einer geschlossenen Funktionsstellung in eine offene Funktionsstellung beispielsweise zum Greifen eines Werkstücks 23.

Figur 1 macht deutlich, dass eine Drehbewegung des ersten Arms 7 um die erste Welle 13 herum eine Änderung der Funktionsstellung des Werkstückgreifers 5 bewirkt, da bei einer Bewegung des Arms 5 eine Relativbewegung zwischen der starren Stange 31 und dem ersten Arm 7 stattfindet, sodass der Greifermechanismus 33 betätigt wird und eine Öffnungs- oder Schließbewegung des Werkstückgreifers bewirkt wird. Der Greifermechanismus 33 kann auf verschiedene bekannte Art und Weise realisiert sein, sodass hier nicht näher darauf eingegangen werden soll.

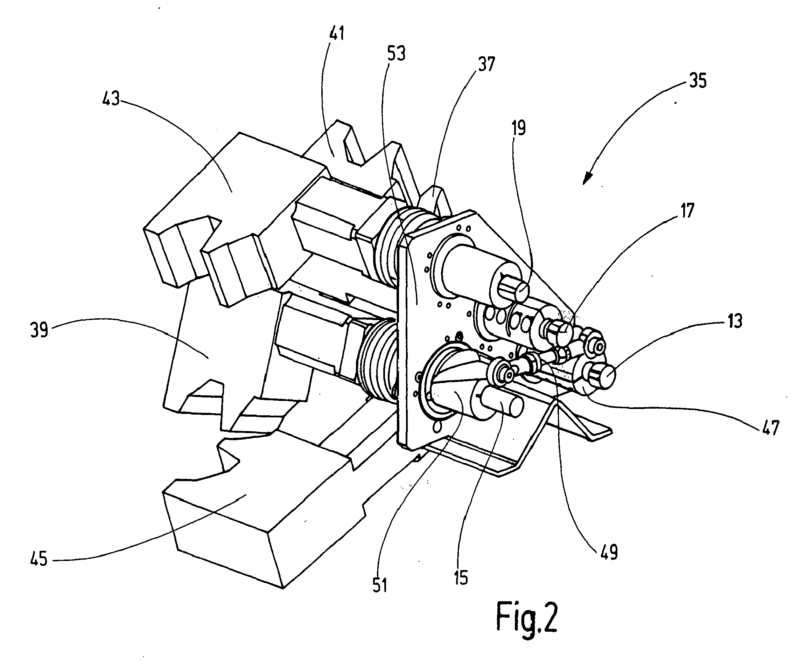

Die Betätigung des Greifermechanismus 33 während der Bewegung des ersten Arms 7 kann zur Folge haben, dass der erste Werkstückgreifer 5 ein Werkstück 23 wegen der Bewegung des ersten Arms 7 loslässt. Eine derartige Änderung der Funktionsstellung des ersten Werkstückgreifers 5 während einer Bewegung des ersten Arms 7 wird hier durch einen dreh- oder schwenkbar gelagerten Antrieb verhindert, der in der Beschreibung zu Figur 2 näher erläutert wird.

Figur 2 zeigt eine perspektivische Darstellung eines Antriebsbereichs 25 eines Werkstückwechselsystems 1. Gleiche Teile sind mit gleichen Bezugszeichen versehen, sodass insofern auf die Beschreibung zu Figur 1 verwiesen wird.

Ein erster hier nur angedeuteter Antrieb 37 wirkt über die erste Welle 13 mit dem ersten Arm 7 zusammen. Ein zweiter Antrieb 39 wirkt über die zweite Welle 15 mit dem ersten Werkstückgreifer 5 zusammen. Auch ist ein dritter Antrieb 41 vorgesehen, der über die dritte Welle 17 mit dem zweiten Arm 11 zusammenwirkt, außerdem ein vierter Antrieb 43, der über die vierte Welle 19 mit dem zweiten Werkstückgreifer 9 zusammenwirkt. Auf diese Weise sind die Arme 7 und 11 und die Werkstückgreifer 9 und 5 völlig unabhängig voneinander über die Antriebe 37, 39, 41 und 43 betätigbar. Ein fünfter Antrieb 45 dient zur Betätigung beispielsweise eines Riemens zur Verlagerung des hier nicht dargestellten Schlittens 21.

Um eine Änderung der Funktionsstellung beispielsweise von einem geschlossenen in einen offenen Zustand des ersten Werkstückgreifers 5 während einer Bewegung des ersten Arms 7 zu vermeiden, ist an der ersten Welle 13 drehfest ein Kopplungselement 47 angeordnet, an dem eine starre Stange 49 drehbar befestigt ist. Die starre Stange 49 ist außerdem drehbar an einem weiteren Kopplungselement 51 gelagert, welches drehfest mit der zweiten Welle 15 verbunden ist. Der zweite Antrieb 39 ist mit der zweiten Welle 15 in einem hier nicht dargestellten Lager drehbar gelagert, sodass eine Relativbewegung des Antriebs 39 relativ zu einem Befestigungselement 53 erfolgen kann.

Figur 2 macht deutlich, dass eine Drehung der Welle 13 eine Drehung des Kopplungselements 47 und damit eine Bewegung der starren Stange 49 nach links oder rechts bewirkt. Die Verlagerung der starren Stange 49 nach links oder rechts bewirkt wiederum über das Kopplungselement 51 eine Drehung des Antriebs 39 und damit eine Drehbewegung der Welle 15.

Diese Ausgestaltung bewirkt in vorteilhafter Weise, dass bei einer Bewegung des ersten Arms 7 durch eine Drehbewegung der ersten Welle 13 eine Betätigung der in Figur 1 dargestellten starren Stange 31 bewirkt wird, die eine Veränderung der Funktionsstellung des ersten Werkstückgreifers 5 vermeidet.

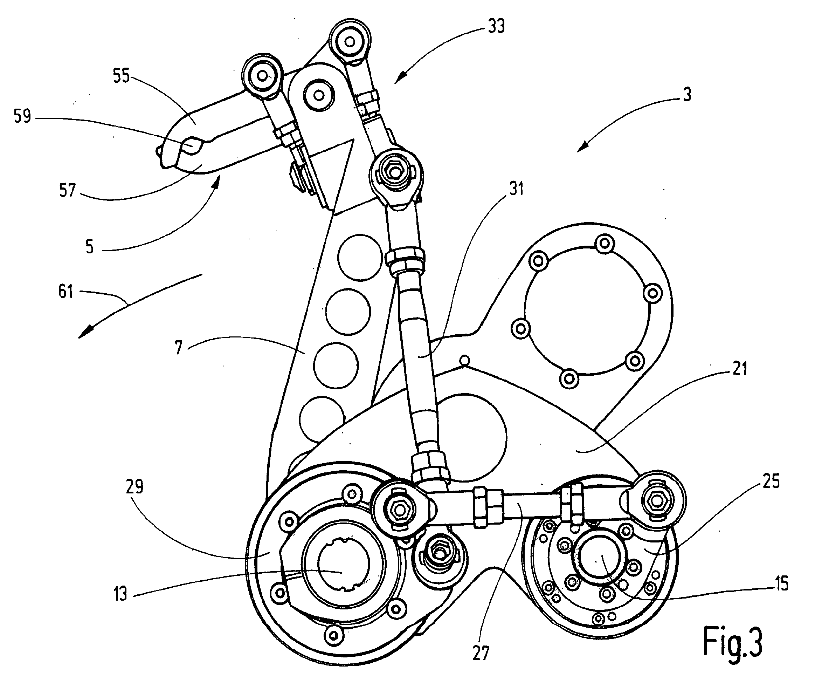

Die Funktionsweise beziehungsweise das Zusammenwirken des ersten Arms 7 und des ersten Werkstückgreifers 5 werden nun anhand von Figur 3 näher erläutert. Figur 3 zeigt eine Seitenansicht der Werkstückwechseleinheit 3, wobei hier jedoch lediglich der erste Arm 7 und der erste Werkstückgreifer 5 aus Gründen der Übersichtlichkeit dargestellt sind. Gleiche Teile sind mit gleichen Bezugszeichen versehen, sodass insofern auf die Beschreibung zu den vorangegangenen Figuren verwiesen wird, um Wiederholungen zu vermeiden.

In Figur 3 befindet sich der erste Arm 7 in einer ersten Position, in welcher der erste Werkstückgreifer 5 außerhalb eines Bearbeitungsbereichs einer Werkstückbearbeitungsmaschine angeordnet ist. Der erste Werkstückgreifer 5 weist zwei Greiferelemente 55 und 57 auf, die aneinander anliegen und so eine geschlossene Funktionsstellung des definieren.

Bei einer Bewegung des ersten Arms 7 in Richtung des Pfeils 61, also in Richtung eines Bearbeitungsbereichs beispielsweise einer Werkstückbearbeitungsmaschine, würde eine Relativbewegung zwischen dem Greifermechanismus 33 und der starren Stange 31 bewirkt werden, sodass der erste Werkstückgreifer 5 von der in Figur 3 gezeigten geschlossenen Funktionsstellung in eine geöffnete Funktionsstellung verlagert wird und somit ein Werkstück 23 verliert. Um die Änderung der Funktionsstellung des ersten Werkstückgreifers 5 zu vermeiden, wird während der Bewegung des ersten Arms 7 über die erste Welle 13 eine Verlagerung der starren Stange 49 und damit eine Schwenkbewegung des Antriebs 39 beziehungsweise der zweiten Welle 15 bewirkt. Durch die Schwenkbewegung der zweiten Welle 15 findet eine Schwenkbewegung des Drehelements 25 und damit eine Verlagerung der starren Stange 27 statt, die wiederum eine Schwenkbewegung des Drehelements 29 bewirkt. Durch die Schwenkbewegung des Drehelements 29 folgt die starre Stange 31 der Bewegung des ersten Arms 7, sodass eine Relativbewegung zwischen der starren Stange 31 und dem Greifermechanismus 33 vermieden wird und damit der erste Werkstückgreifer 5 während einer Bewegung des ersten Arms 7 in seiner ursprünglichen Funktionsstellung verbleibt.

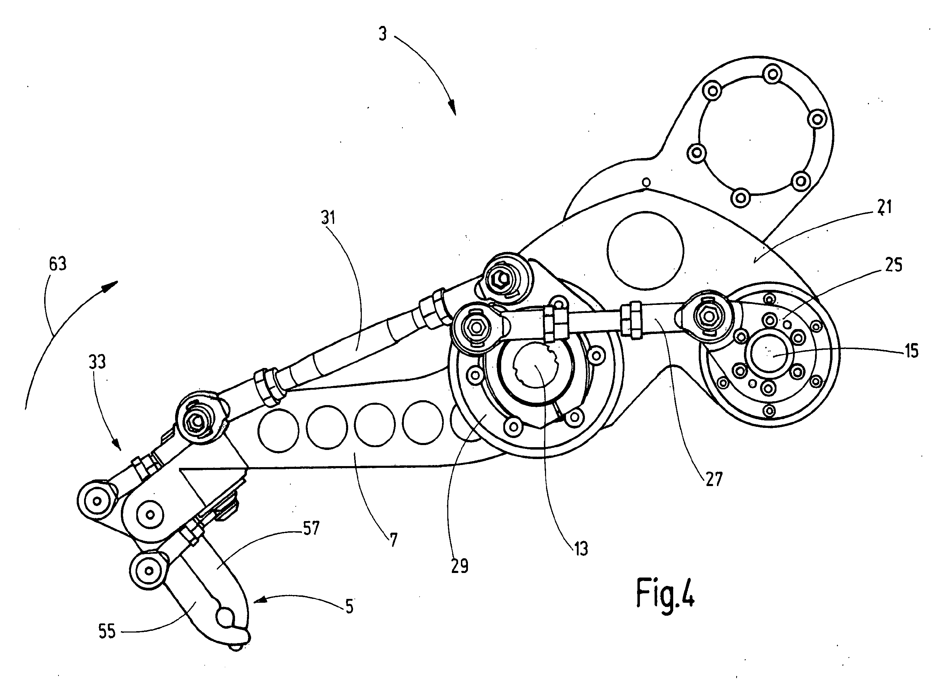

Figur 4 zeigt die Werkstückwechseleinheit 3 gemäß Figur 3 in einer zweiten Position des ersten Arms 7. Gleiche Teile sind mit gleichen Bezugszeichen versehen, sodass insofern auf die Beschreibung zu den vorangegangenen Figuren verwiesen wird.

In der zweiten Position des ersten Arms 7 befindet sich der erste Werkstückgreifer 5 in einem Bearbeitungsbereich beispielsweise einer Werkstückbearbeitungsmaschine. Der erste Werkstückgreifer 5 weist nach wie vor eine geschlossene Funktionsstellung auf. Bei einer Drehbewegung der ersten Welle 13 nach links, wenn sich der erste Arm 7 ausgehend von Figur 3 also nach unten in Richtung des Pfeils 61 bewegt, wird eine Schwenkbewegung des Antriebs 39 und damit eine Schwenkbewegung der zweiten Welle 15 bewirkt, die wiederum eine Schwenkbewegung des Drehelements 25 und damit eine Verlagerung der starren Stange 27 nach links bewirkt. Durch die Verlagerung der starren Stange 27 wird eine Relativbewegung zwischen der starren Stange 31 und dem Greifermechanismus 33 vermieden, sodass also der erste Werkstückgreifer 5 seine ursprüngliche Funktionsstellung, hier eine geschlossene Funktionsstellung, beibehält. Gleiches gilt selbstverständlich auch für eine Bewegung des ersten Arms 7 in Richtung eines Pfeils 63, also aus einem Bearbeitungsbereich einer Werkstückbearbeitungsmaschine heraus.

Durch den hier beschriebenen Ausgleichsmechanismus, der durch einen schwenk- oder drehbar gelagerten Antrieb 39 realisiert wird, wird eine Änderung der Funktionsstellung des ersten Werkstückgreifers 5 bei einer Bewegung des ersten Arms 7 in vorteilhafter Weise vermieden.

Unabhängig von der Position des ersten Arms 7 kann mittels einer Betätigung des Antriebs 39 die Funktionsstellung des ersten Werkstückgreifers 5 aktiv verändert werden. Dabei wird statt einer Drehbeziehungsweise Schwenkbewegung des Antriebs 39 lediglich eine Schwenkbewegung der zweiten Welle 15 durch die Betätigung des Antriebs 39 bewirkt, sodass wiederum das Drehelement 25 eine Schwenkbewegung ausführt, die wiederum zu einer Verlagerung der starren Stange 27 und damit zu einer Schwenkbewegung des Drehelements 29 führt. Diese bewirkt eine Relativbewegung zwischen dem Greifermechanismus 33 und der starren Stange 31, sodass der erste Werkstückgreifer 5 seine Funktionsstellung ändert.

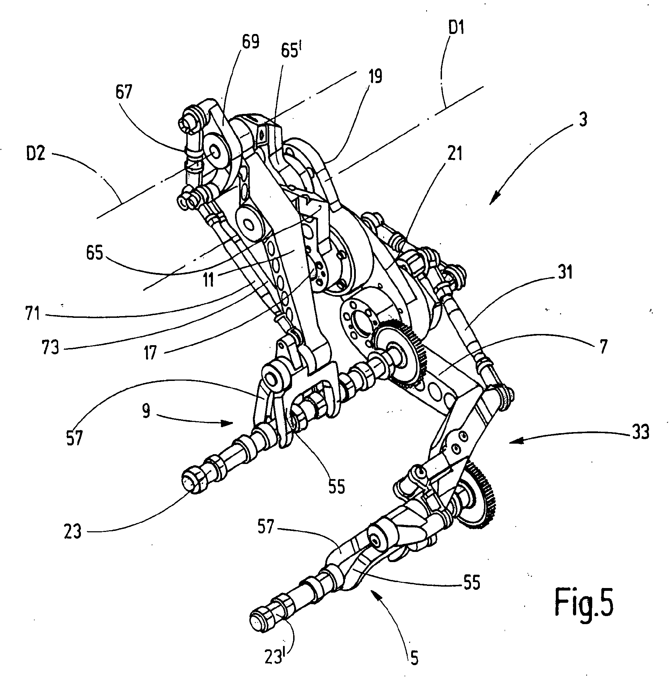

Figur 5 zeigt eine perspektivische Darstellung einer Werkstückwechseleinheit 3. Gleiche Teile sind mit gleichen Bezugszeichen versehen, sodass insofern auf die Beschreibung zu den vorangegangenen Figuren verwiesen wird, um Wiederholungen zu vermeiden.

Entsprechend der perspektivischen Darstellung in Figur 1 sind in Figur 5 beide Arme 7 und 11 sowie beide Werkstückgreifer 5 und 9 erkennbar. Es wird deutlich, dass die Werkstückgreifer 5 und 9 vorzugsweise als Doppelgreifer ausgeführt sind, um ein Werkstück 23 beziehungsweise 23' sicher greifen zu können. Im Folgenden wird auf die Funktionsweise des zweiten Arms 11 und des zweiten Werkstückgreifers 9 eingegangen.

Eine Bewegung des zweiten Arms 11 durch eine Drehung der dritten Welle 17 erfolgt über ein Kopplungselement 65, das mit der dritten Welle 17 drehfest verbunden ist und an einer Drehachse D1 an dem zweiten Arm 11 drehbar angreift. Der zweite Arm 11 ist außerdem an einer Drehachse D2 gelagert, die sich bei einer Bewegung des zweiten Arms 11 mit diesem bewegt. Die Drehachse D2 ist drehbar mit einem weiteren Kopplungselement 65' verbunden, welches außerdem drehbar auf der vierten Welle 19 gelagert ist. In Figur 5 ist noch eine starre Stange 67 erkennbar, die einerseits drehbar an einem Betätigungselement 69 befestigt ist, welches drehbar auf der zweiten Drehachse D2 gelagert ist und die andererseits mit einem hier nicht erkennbaren, auf der Welle 19 drehfest gelagerten Drehelement drehbar verbunden ist.

Das hier nicht erkennbare, drehfest auf der vierten Welle 19 gelagerte Drehelement, die starre Stange 67, das Betätigungselement 69 sowie zwei starre Stangen 71 und 73 bilden den Betätigungsmechanismus für den zweiten Werkstückgreifer 9. Die Ausgestaltung des zweiten Arms 11 und des Betätigungsmechanismus des zweiten Werkstückgreifers 9 bewirkt in vorteilhafter Weise, dass bei einer Bewegung des zweiten Arms 11 die Funktionsstellung des zweiten Werkstückgreifers 9 unverändert bleibt.

Der Betätigungsmechanismus für den zweiten Werkstückgreifer 9 ist von der Bewegung des zweiten Arms 11 entkoppelt, sodass ein Ausgleich von Relativbewegungen bei einer Bewegung des zweiten Arms 11 nicht erforderlich ist. Bei einer Bewegung des zweiten Arms 11 verlagert sich, wie oben bereits erwähnt wurde, auch die Drehachse D2, wodurch auch die starre Stange 67 verlagert wird. Während das an dem Betätigungselement 69 drehbar befestigte Ende der starren Stange 67 der Bewegung des Arms 11 folgt, bleibt das an dem hier nicht erkennbaren Drehelement drehbar gelagerte andere Ende der starren Stange 67 fest mit der Welle 19 verbunden. Dadurch erfolgt bei der Verlagerung des zweiten Arms 11 keine Betätigung der Betätigungselements 69 durch die starre Stange 67. Die Relativposition zwischen dem Betätigungselement 69 und dem zweiten Arm 11 bleibt unverändert, sodass auch die starren Stangen 71 und 73 nicht von dem Betätigungselement 69 betätigt werden und der zweite Werkstückgreifer 9 seine Funktionsstellung auch während einer Bewegung des zweiten Arms 11 unverändert beibehält.

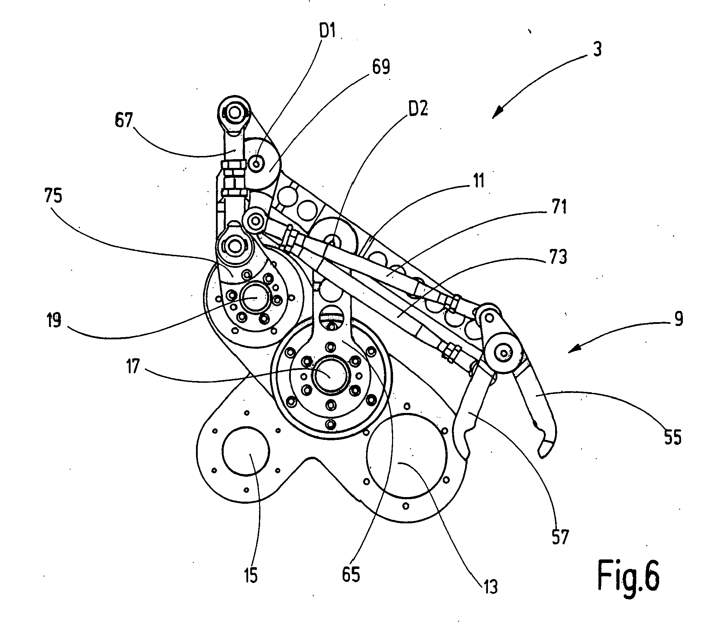

Die Funktionsweise des zweiten Arms 11 und des zweiten Werkstückgreifers 9 wird im Folgenden anhand von Figur 6 näher erläutert. Figur 6 zeigt eine Seitenansicht einer Werkstückwechseleinheit 3, wobei zur Verbesserung der Übersichtlichkeit lediglich der zweite Arm 11 und der zweite Werkstückgreifer 9 dargestellt sind. Gleiche Teile sind mit gleichen Bezugszeichen versehen, sodass insofern auf die Beschreibung zu den vorangegangenen Figuren verwiesen wird.

In Figur 6 befindet sich der zweite Arm 11 in einer ersten Position, in der der zweite Werkstückgreifer 9 außerhalb eines Bearbeitungsbereichs beispielsweise einer Werkstückbearbeitungsmaschine angeordnet ist. Erkennbar ist hier auch das drehfest mit der vierten Welle 19 gekoppelte Drehelement 75, das bei einer Drehung der vierten Welle 19 ebenfalls eine Drehbewegung ausführt. Die Betätigung des zweiten Werkstückgreifers 9 erfolgt über das Drehelement 75, die starre Stange 67, das Betätigungselement 69 sowie die starren Stangen 71 und 73, die mit den Greiferelementen 55 und 57 gekoppelt sind.

Eine Schwenkbewegung des Drehelements 75 bewirkt eine Verlagerung der starren Stange 67, was wiederum eine Schwenkbewegung des Drehelements 69 bewirkt. Eine Schwenkbewegung des Drehelements 69 bewirkt eine Verlagerung der starren Stangen 71 und 73, die sich je nach Drehrichtung des Drehelements 69 auf den zweiten Werkstückgreifer 9 zu oder von diesem wegbewegen.

Bei einer Schwenkbewegung des Drehelements 69 von Figur 6 aus gesehen nach rechts, erfolgt eine Bewegung der starren Stangen 71 und 73 zu dem zweiten Werkstückgreifer 9 hin. Dadurch, dass die starre Stange 71 mit dem Greiferelement 55 und die starre Stange 73 mit dem Greiferelement 57 gekoppelt ist, erfolgt dadurch eine Änderung der Funktionsstellung des zweiten Werkstückgreifers 9 in eine geschlossene Funktionsstellung.

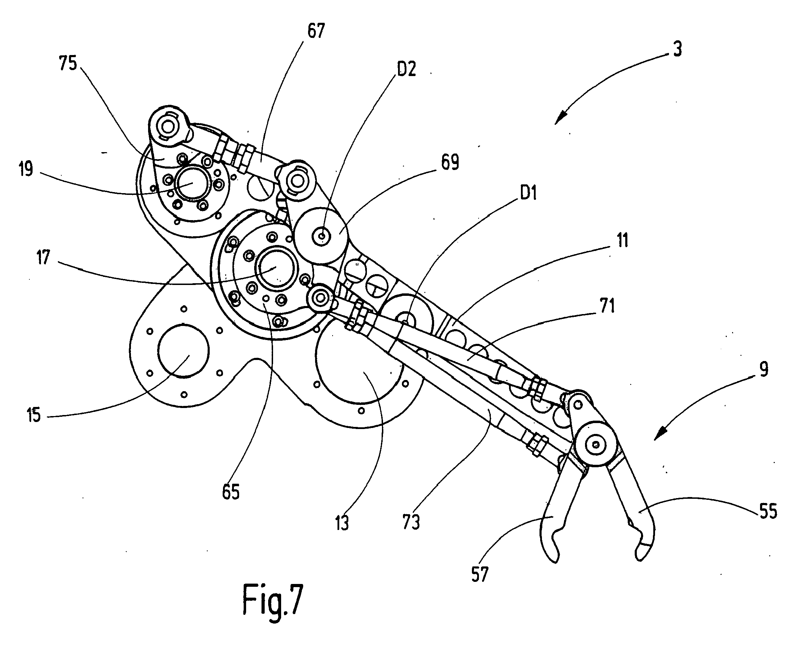

Die Funktionsstellung des zweiten Werkstückgreifers 9 bleibt durch die Entkopplung des Betätigungsmechanismus für den zweiten Werkstückgreifer 9 und der Bewegung des zweiten Arms 11 unverändert. Figur 7 macht deutlich, dass sich die Funktionsstellung des zweiten Werkstückgreifers 9 trotz einer Verlagerung des zweiten Arms 11 in eine andere Position nicht verändert hat.

Figur 7 zeigt eine Seitenansicht der Werkstückwechseleinheit 3, wobei der zweite Arm 11 gegenüber der Darstellung gemäß Figur 6 in eine andere Position verlagert wurde. Der zweite Werkstückgreifer 9 befindet sich nach wie vor in einer geöffneten Funktionsstellung und ist in der Position des zweiten Arms 11 vorzugsweise in dem Bearbeitungsbereich beispielsweise einer Werkstückbearbeitungsmaschine angeordnet. Gleiche Teile sind mit gleichen Bezugszeichen versehen, sodass insofern auf die Beschreibung zu den vorangegangenen Figuren verwiesen wird.

Figur 7 macht deutlich, dass bei einer Bewegung des zweiten Arms 11, die starre Stange 67 der Bewegung des zweiten Arms 11 folgt und somit eine Betätigung des zweiten Werkstückgreifers 9 durch das Drehelement 75 des zweiten Werkstückgreifers 9 ausbleibt. Durch die starre Stange 67, die einerseits drehbeweglich an dem Drehelement 75 und andererseits drehbeweglich an dem Betätigungselement 69 gelagert ist, ist der Betätigungsmechanismus für den zweiten Werkstückgreifer 9 von einer Bewegung des zweiten Arms 11 entkoppelt. Eine Änderung der Funktionsstellung des zweiten Werkstückgreifers 9 bleibt somit aus.

Wird in einer bestimmten Position des zweiten Arms 11 eine Änderung der Funktionsstellung des zweiten Werkstückgreifers 9, beispielsweise zum Greifen eines fertig bearbeiteten Werkstücks gewünscht, kann eine Betätigung beziehungsweise eine Drehung der vierten Welle 19 in jeder Position des zweiten Arms 11 eine Änderung der Funktionsstellung des zweiten Werkstückgreifers 9 bewirken. In Figur 7 befindet sich der zweite Werkstückgreifer 9 gemäß Figur 6 in einer geöffneten Funktionsstellung, sodass die Greiferelemente 55 und 57 also nicht aneinander anliegen.

Ein Vergleich der Figuren 6 und 7 macht deutlich, dass der zweite Arm 11 bei einer Betätigung der dritten Welle 17 eine Parallel- und zugleich eine Transversalbewegung ausführt. Diese Parallel- und Transversalbewegung des zweiten Arms 11 wird durch dessen Lagerung an der Drehachse D1 und an der Drehachse D2 bewirkt. Die dritte Welle 17, die vierte Welle 19, die erste Drehachse D1 sowie die zweite Drehachse D2 bilden quasi ein Parallelogramm, welches auch während einer Bewegung des zweiten Arms 11 beispielsweise zu einem Bearbeitungsbereich einer Werkstückbearbeitungsmaschine, erhalten bleibt.

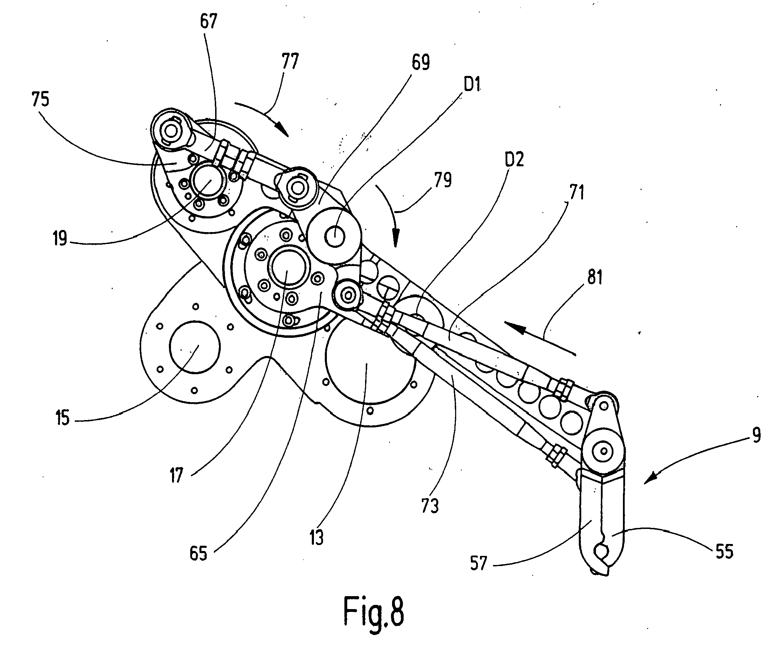

Der Betätigungsmechanismus zur Änderung der Funktionsstellung des zweiten Werkstückgreifers 9 wird im Folgenden anhand von Figur 8 näher erläutert.

Figur 8 zeigt eine Seitenansicht einer Werkstückwechseleinheit 3 gemäß den Figuren 6 und 7. Der zweite Arm 11 befindet sich in Figur 8 an der gleichen Position wie in Figur 7. Allerdings weist der zweite Werkstückgreifer 9 hier eine geschlossene Funktionsstellung auf.

Figur 8 macht deutlich, dass das Betätigungselement 69 in Figur 8 eine Schwenkbewegung gegen den Uhrzeigersinn gegenüber Figur 7 ausgeführt hat, sodass also die starren Stangen 71 und 73 in Richtung des zweiten Werkstückgreifers 9 verlagert wurden. Die Betätigung des Betätigungselements 69 erfolgt dabei über eine Schwenkbewegung der vierten Welle 19 und damit eine Schwenkbewegung des Drehelements 75, welches drehfest mit der vierten Welle 19 verbunden ist. Bei einer Schwenkbewegung des Drehelements 75 nach rechts - also im Uhrzeigersinn - erfolgt eine Verlagerung der starren Stange 67 in Richtung des Pfeils 77, wobei das Betätigungselement 69 eine Schwenkbewegung in Richtung Pfeils 79 ausführt. Dadurch wird eine Verlagerung der starren Stangen 71 und 73 in Richtung des Pfeils 81 bewirkt. Dadurch kann der zweite Werkstückgreifer 9 ausgehend von der geschlossenen Funktionsstellung gemäß Figur 8 wieder in seine geöffnete Funktionsstellung gemäß Figur 7 verlagert werden.

Durch die vorteilhafte Ausgestaltung des zweiten Arms 11 und des Betätigungsmechanismus des zweiten Werkstückgreifers 9 wird bewirkt, dass bei einer Bewegung des zweiten Arms 11 die Funktionsstellung des zweiten Werkstückgreifers 9 unverändert bleibt. Ferner kann die Funktionsstellung des zweiten Werkstückgreifers 9 unabhängig von der jeweiligen Position des zweiten Arms 11 über den Betätigungsmechanismus, der mit der vierten Welle 19 zusammenwirkt, geändert werden.

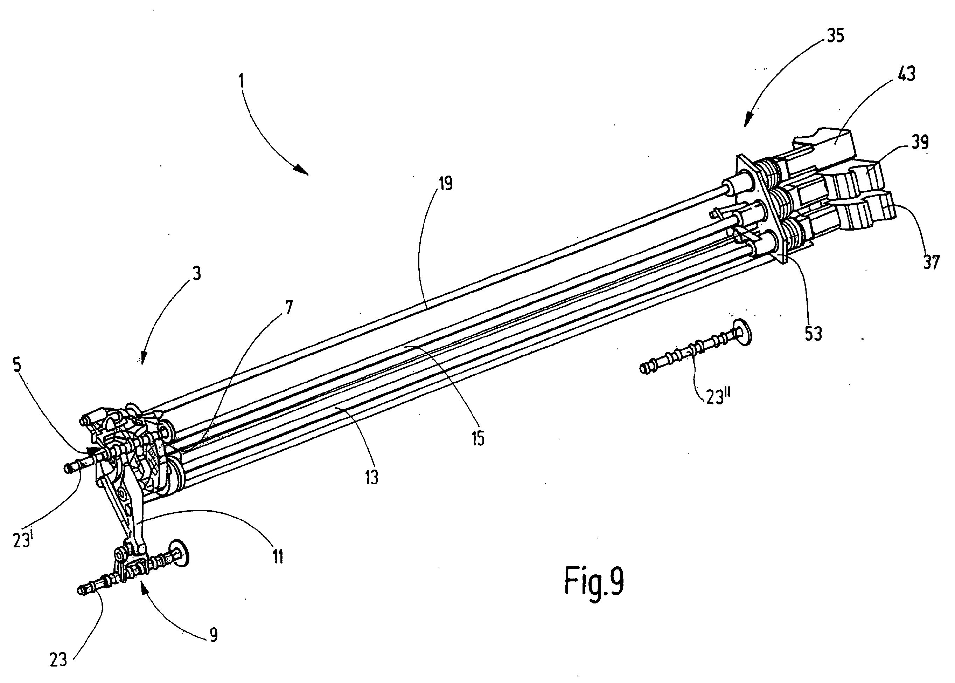

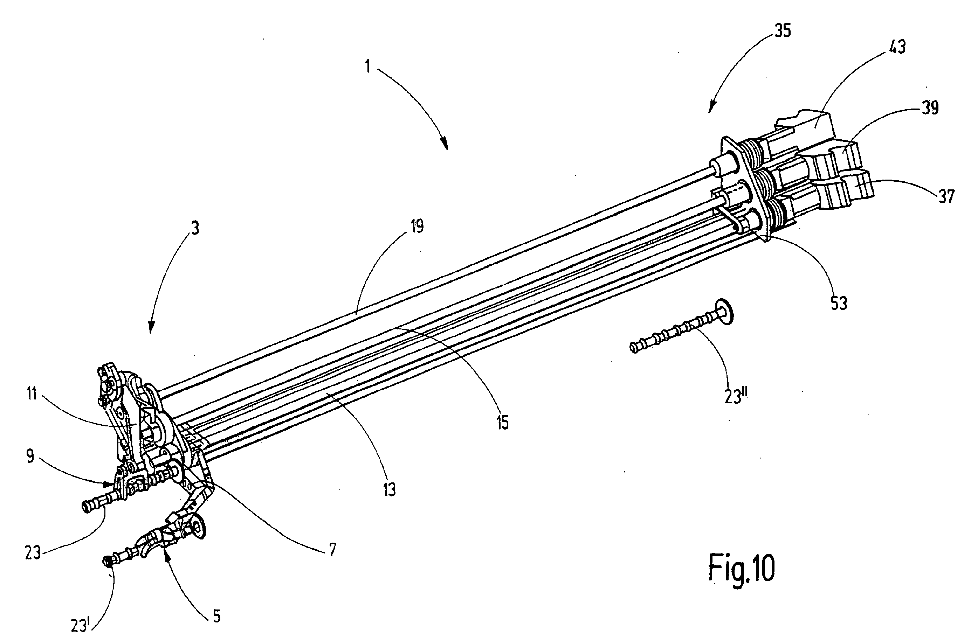

Die Wirkungsweise des Werkstückwechselsystems 1 zum Wechseln eines fertig bearbeiteten Werkstücks gegen ein noch zu bearbeitendes Werkstück wird im Folgenden anhand der Figuren 9 und 10 erläutert.

Figur 9 zeigt ein Werkstückwechselsystem 1 aus einer perspektivischen Darstellung. Gleiche Teile sind mit gleichen Bezugszeichen versehen, sodass insofern auf die Beschreibung zu den vorangegangenen Figuren verwiesen wird.

Figur 9 zeigt die Werkstückwechseleinheit 3 in einer ersten Funktionsstellung. Der zweite Werkstückgreifer 9 ist durch eine entsprechende Bewegung des zweiten Arms 11 in einem Bearbeitungsbereich beispielsweise einer Werkstückbearbeitungsmaschine verlagert worden.

Figur 9 macht deutlich, dass der Werkstückgreifer 9 ein Werkstück 23, welches sich vorzugsweise zwischen zwei hier nicht dargestellten Spitzen befindet, umgreift. Durch die hier nicht dargestellte Öffnung 59, die zwischen den beiden Greiferelementen 55 und 57 im geschlossenen Zustand gebildet wird, kann der Werkstückgreifer 9 das Werkstück 23 bereits umgreifen, wenn sich dieses noch in Bearbeitung befindet. Insbesondere ist vorgesehen, dass der zweite Werkstückgreifer 9 auf 1/10 Millimeter an das in Bearbeitung befindliche Werkstück 23 heran verlagert wird.

In dieser Funktionsstellung der Werkstückwechseleinheit 3 befindet sich der erste Werkstückgreifer 5 in einer Position außerhalb des Bearbeitungsbereichs und umgreift ein noch zu bearbeitendes Werkstück 23'. Sobald die Bearbeitung des Werkstücks 23 abgeschlossen ist, wird das Werkstück 23 in der Bearbeitungsmaschine ausgespannt, sodass der zweite Werkstückgreifer 9 das Werkstück 23 unmittelbar danach oder auch schon vorher fest umgreifen kann. Sobald der zweite Werkstückgreifer 9 das Werkstück 23 fest umgriffen hat und das Werkstück 23 nicht mehr fest eingespannt ist, erfolgt die Verlagerung des zweiten Werkstückgreifers 9 über eine Bewegung des zweiten Arms 11 aus dem Bearbeitungsbereich hinaus. Gleichzeitig kann der erste Werkstückgreifer 5 über eine Bewegung des ersten Arms 7 in den Bearbeitungsbereich verlagert werden, sodass sich gemäß der Darstellung in Figur 10 nun der erste Werkstückgreifer 5 und damit das noch zu bearbeitende Werkstück 23' in dem Bearbeitungsbereich der Werkstückbearbeitungsmaschine angeordnet ist.

Der zweite Werkstückgreifer 9 mit dem fertig bearbeitenden Werkstück 23 befindet sich nun außerhalb des Bearbeitungsbereichs. Sobald das zu bearbeitende Werkstück 23' beispielsweise zwischen den nicht dargestellten Spitzen in einer Werkstückbearbeitungsmaschine fest eingespannt ist, kann der erste Werkstückgreifer 5 seine geöffnete Funktionsstellung einnehmen und mittels einer Bewegung des ersten Arms 7 aus dem Bearbeitungsbereich verlagert werden. Anschließend kann der Schlitten 21 über den fünften Antrieb 45 zu einem Magazin befördert werden, wo die Werkstückwechseleinheit 3 das fertig bearbeitete Werkstück 23 ablegen kann und ein neues zu bearbeitendes Werkstück 23" greifen kann. Im Anschluss daran wiederholt sich der oben beschriebene Ablauf.

Die vorteilhafte Ausgestaltung der hier vorliegenden Erfindung macht es im Übrigen möglich, dass der erste Arm 7 und der zweite Arm 11 mit Werkstücken 23 beziehungsweise 23' kollisionsfrei aneinander vorbeischwenkbar sind.

Dadurch, dass der erste Arm 7 eine Drehbewegung um die Welle 13 und der zweite Arm 11 keine Drehbewegung, sondern gleichzeitig eine Parallel- und eine Transversalbewegung ausführt, verlaufen die Bewegungsbahnen der Arme 7 und 11 versetzt zueinander. Dadurch wird eine erhebliche Zeitersparnis bei einem Werkstückwechsel bewirkt, da einer der Arme 7 oder 11 nicht warten muss, bis der jeweils andere Arm vollständig aus dem Bearbeitungsbereich herausgeschwenkt wurde, sondern lediglich die Position zwischen den Spitzen frei sein muss, um das noch zu bearbeitende Werkstück 23' dort zu positionieren. Die Bewegung der beiden Arme 7 und 11 kann mit den Werkstücken 23 und 23' gleichzeitig erfolgen. Es ist dadurch in vorteilhafter Weise möglich, sobald sich das fertig bearbeitete Werkstück 23' nicht mehr zwischen den Spitzen befindet, unmittelbar danach das zu bearbeitende Werkstück 23 zwischen die Spitzen zu verlagern. Dadurch ergeben sich wesentlich reduzierte Werkstückwechselzeiten.

Insbesondere ist vorgesehen, sämtliche Antriebe außerhalb des Bearbeitungsbereichs der Werkstückbearbeitungsmaschine und/oder vollständig außerhalb der Werkstückbearbeitungsmaschine anzuordnen. Darüber hinaus ist vorgesehen, dass sämtliche elektrischen und/oder elektronischen Elemente außerhalb des Bearbeitungsbereichs und/oder vollständig außerhalb der Werkstückbearbeitungsmaschine angeordnet sind. Durch die vorteilhafte Ausgestaltung der vorliegenden Erfindung ergibt sich damit eine Werkstückwechseleinheit 3, die ausschließlich über außenliegende feststehende Antriebe 37, 39, 41, 43 und über Wellen 13, 15, 17, 19 betätigbar ist, sodass das Gewicht der Werkstückwechseleinheit 3 wesentlich reduziert werden kann, dadurch dass keine zusätzlichen Elemente mit der Werkstückwechseleinheit 3 beziehungsweise mit dem Schlitten 21 auf den Führungswellen verlagert werden müssen. Über die getrennten Antriebe sind sowohl die beiden Arme 7 und 11 als auch die beiden Werkstückgreifer 5 und 9 völlig unabhängig voneinander betätigbar.

Bei den Antrieben handelt es sich vorzugsweise um Servomotoren, die eine besonders exakte Positionierung sowohl der beiden Arme 7 und 11 als auch der Funktionsstellungen der Werkstückgreifer 5 und 9 ermöglichen. Somit ist es möglich, einen Werkstückgreifer 5 oder 9 an ein in einer Bearbeitungsposition befindliches Werkstück 23' so nah heranzuverlagern, dass der Abstand zwischen dem in Bearbeitung befindlichen Werkstück 23' und dem Werkstückgreifer vorzugsweise nur noch etwa ein zehntel Millimeter beträgt. Dadurch kann die Werkstückwechselzeit wesentlich reduziert werden. Zu einer weiteren Reduzierung der Werkstückwechselzeit führt die gleichzeitige Betätigung der Arme 7 und 11 beziehungsweise der Werkstückgreifer 5 und 9 bei einem Werkstückwechsel, wobei also ein Werkstückgreifer das rohe Werkstück an den Bearbeitungsbereich heranführt, während das zweite Werkstück das fertige Werkstück aus dem Bearbeitungsbereich entfernt. Entscheidend hierbei ist, dass die beiden Werkstückgreifer 5 und 9 kollisionsfrei aneinander vorbeischwenkbar sind.

## Patentansprüche

1. Werkstückwechselsystem (1) für Werkstückbearbeitungsmaschinen, das eine einen ersten und einen zweiten Werkstückgreifer (5,9) aufweisende Werkstückwechseleinheit (3) umfasst, **dadurch gekennzeichnet, dass** dem ersten Werkstückgreifer (5) ein drehbar gelagerter erster Arm (7) und dem zweiten Werkstückgreifer (9) ein drehbar gelagerter zweiter Arm (11) zugeordnet ist, und dass der erste Arm (7), der zweite Arm (11), der erste Werkstückgreifer (5) und der zweite Werkstückgreifer (9) durch getrennte Antriebe (37,39,41,43) unabhängig voneinander betätigbar sind.

2. Werkstückwechselsystem nach Anspruch 1, **dadurch gekennzeichnet, dass** die Antriebe (37,39,41,43) über Wellen (13,15,17,19) mit den Armen (7,11) und den Werkstückgreifern (5,9) gekoppelt sind.

3. Werkstückwechselsystem nach Anspruch 1 oder 2, **dadurch gekennzeichnet, dass** mindestens eine der Wellen (13,15) als Führungswelle eines Schlittens (21) dient.

4. Werkstückwechselsystem nach Anspruch 3, **dadurch gekennzeichnet, dass** die Arme (7,11) drehbar an dem Schlitten (21) gelagert sind.

5. Werkstückwechselsystem nach Anspruch 3 oder 4, **dadurch gekennzeichnet, dass** die Verlagerung des Schlittens (21) entlang der mindestens einen Führungswelle über einen weiteren Antrieb (45) erfolgt.

6. Werkstückwechselsystem nach einem der vorhergehenden Ansprüche, **dadurch gekennzeichnet, dass** der mit dem ersten Werkstückgreifer (5) zusammenwirkende Antrieb (39) dreh- oder schwenkbar gelagert ist.

7. Werkstückwechselsystem nach Anspruch 5, **dadurch gekennzeichnet, dass** der dreh- oder schwenkbar gelagerte Antrieb (39) über eine starre Stange (49) mit der dem ersten Arm (7) zugeordneten Welle (13) gekoppelt ist.

8. Werkstückwechselsystem nach einem der Ansprüche 2 bis 6, **dadurch gekennzeichnet, dass** der erste Arm (7) unmittelbar mit der Welle (13) zusammenwirkt.

9. Werkstückwechselsystem nach einem der Ansprüche 5 bis 7, **dadurch gekennzeichnet, dass** eine Änderung der Funktionsstellung des ersten Werkstückgreifers (5) bei einer Bewegung des ersten Arms (7) durch den dreh- oder schwenkbar gelagerten Antrieb (39) vermieden wird.

10. Werkstückwechselsystem nach einem der Ansprüche 2 bis 8, **dadurch gekennzeichnet, dass** der zweite Arm (11) über ein Kopplungselement (65) mit der Welle (17) zusammenwirkt.

11. Werkstückwechselsystem nach einem der vorhergehenden Ansprüche, **dadurch gekennzeichnet, dass** der zweite Arm (11) eine überlagerte Parallel- und Transversalbewegung ausführt.

12. Werkstückwechselsystem nach einem der vorhergehenden Ansprüche, **dadurch gekennzeichnet, dass** bei einer Bewegung des zweiten Arms (11) die Funktionsstellung des zweiten Werkstückgreifers (9) unverändert bleibt.

13. Werkstückwechselsystem nach einem der vorhergehenden Ansprüche, **dadurch gekennzeichnet, dass** es sich bei den Werkstückgreifern (5,9) um Doppelgreifer handelt.

14. Werkstückwechselsystem nach einem der vorhergehenden Ansprüche, **dadurch gekennzeichnet, dass** sämtliche Antriebe (37,39,41,43,45) sowie elektrische und sensorische Elemente außerhalb des Bearbeitungsbereichs der Werkstückbearbeitungsmaschine und/oder vollständig außerhalb der Werkstückbearbeitungsmaschine angeordnet sind.

15. Werkstückwechselsystem nach einem der vorhergehenden Ansprüche, **dadurch gekennzeichnet, dass** es sich bei den Antrieben (37,39,41,43,45) um Servomotoren handelt.

16. Werkstückwechselsystem nach einem der vorhergehenden Ansprüche, **dadurch gekennzeichnet, dass** sämtliche elektrischen und/oder elektronischen Elemente, insbesondere sensorische Elemente außerhalb des Bearbeitungsbereichs und/oder vollständig außerhalb der Werkstückbearbeitungsmaschine angeordnet sind.

17. Werkstückwechselsystem nach einem der vorhergehenden Ansprüche, **dadurch gekennzeichnet, dass** der erste und der zweite Arm (7,11) während eines Werkstückwechsels so relativ zueinander verlagerbar sind, dass die jeweils ein Werkstück (23,23') aufweisenden zwei Werkstückgreifer (5,9) kollisionsfrei aneinander vorbei schwenkbar sind.
